# EUROPÄISCHE PATENTSCHRIFT

(11) **EP 0 571 912 B1**
(45) Veröffentlichungstag und Bekanntmachung des Hinweises auf die Patenterteilung: **25.09.1996**
(21) Anmeldenummer: 93108332.3
(22) Anmeldetag: 24.05.1993
(51) Int. Cl.: A01G 3/04

(54) **Handschere**
Hand shears
Cisailles manuelles

(30) Priorität: 27.05.1992 DE 4217504
(43) Veröffentlichungstag der Anmeldung: 01.12.1993
(73) Patentinhaber: Clemens & Co. GmbH, 54516 Wittlich (DE)
(72) Erfinder: Rausch, Erwin, 54316 Pluwig (DE)
(74) Vertreter: Serwe, Karl-Heinz, Dipl.-Ing.

(56) Entgegenhaltungen:
- DE-A- 3 539 240
- GB-A- 1 196 795
- US-A- 3 350 780

## Beschreibung

Die Erfindung betrifft eine Handschere zum Schneiden von Pflanzen, insbesondere zur Verwendung in Weinbergen und Baumschulen, bestehend aus einem von Hand zu haltenden Scherenteil mit einem durch ein Druckmedium gegen den Druck einer Rückstellfeder verschiebbaren Druckkolben zur Betätigung der Schneidklingen, einem im Scherenteil angeordneten Steuerhebel und einem durch einen Druckschlauch mit dem Scherenteil verbundenen Druckteil mit Druckpumpe und Antriebseinheit, wobei der Steuerhebel wirksam mit der Antriebseinheit der Druckpumpe für eine Druckflüssigkeit verbunden ist.

Es ist eine Handschere bekannt, bei der als Druckmedium Luft Verwendung findet. Bei dieser Handschere findet ein stationäres Druckteil mit einem Kompressor Verwendung, das am Rand des Weinberges abgestellt ist. Das Scherenteil ist über einen langen Druckschlauch mit dem Druckteil verbunden. Zur Betätigung der Handschere wird der Steuerhebel im Scherenteil bedient, so daß die durch den Druckschlauch zugeführte Druckluft über den Druckkolben die Schneidklingen betätigt. Wird der Steuerhebel freigegeben, so kann die Druckluft aus dem Scherenteil nach außen entweichen und die Rückstellfeder am Druckkolben zurückschieben und so die Schneidklingen wieder zurückbewegen.

Nachteilig ist bei dieser Handschere, daß der lange Druckschlauch durch den Weinberg gezogen werden muß, was wegen des Gewichtes sehr mühsam ist. Nachteilig ist außerdem, daß diese Handschere sich bei Betätigung des Steuerhebels schlagartig schließt, so daß eine hohe Verletzungsgefahr besteht.

Es ist weiterhin eine Handschere bekannt, die im Scherenteil einen Elektromotor zur Betätigung der Schneidklingen aufweist. Diese Handschere hat ein sehr hohes Gewicht, so daß der Benutzer sehr schnell ermüdet.

Aus der deutschen Auslegeschrift 1 582 663 ist eine gattungsgemäße Handschere bekannt, bei der die Scherenklinge durch Beaufschlagen eines Druckkolbens mit Drucköl geöffnet wird. Die Schließbewegung der Scherenklingen erfolgt bei dieser Handschere durch das Wiederausdehnen der zusammengepressten Feder. Diese Handschere hat daher den Nachteil, daß die Schneidkraft im wesentlichen durch die Feder bestimmt wird, so daß eine Beeinflussung der Schneidkraft und der Schneidbewegung wärend des Schneidens nicht möglich ist. Außerdem weist diese bekannte Handschere wegen der notwendigen Größe der Feder ein erhebliches Gewicht auf, so daß ein längeres Arbeiten mit dieser Handschere sehr ermüdend ist.

Aus der deutschen Offenlegungschrift DE-32 39 596 A1 ist eine hydraulisch angetriebene Schere mit einem doppelt wirkenden Druckkolben bekannt, der über ein Steuerventil gesteuert wird. Wegen des großen Gewichtes dieser Schere und der mit ihr erzielbaren hohen Schneidkräfte kann diese Schere keine Verwendung in Weinbergen und Baumschulen finden.

Aus dem deutschen Gebrauchsmuster DE-GM 78 37 406 ist ein hydraulisches Mehrwegeventil zur Steuerung der Menge der einem Hydraulikmotor zugeführten Hydraulikflüssigkeit bekannt. Bei dieser gattungsgemäß sehr fernstehenden Vorrichtung findet ein kompliziertes, druckgesteuertes Ventil Verwendung.

Die Aufgabe der vorliegenden Erfindung besteht darin, eine Handschere der eingangs genannten Art derart weiterzubilden, daß bei hohen Schneidkräften der Schere eine sichere und einfache Handhabung auch über lange Zeit möglich ist.

Diese Aufgabe wird dadurch gelöst, daß über ein durch den Druck in der Druckleitung gesteuertes Dreiwegeventil bei eingeschalteter Druckpumpe die Druckleitung der Druckpumpe mit dem Druckschlauch zum Scherenteil und bei ausgeschalteter Druckpumpe der Druckschlauch zum Scherenteil mit einer Rücklauflaufleitung zu einem Behälter für die Druckflüssigkeit verbunden ist, wobei das druckgesteuerte Dreiwegeventil einen zwischen den beiden Schaltstellungen durch den Druck in der Druckleitung der Druckpumpe verschiebbaren, federbelasteten Steuerkolben hat, und daß die Druckleitung der Druckpumpe und die Rücklaufleitung durch eine Bypassleitung miteinander verbunden sind.

Die vorgeschlagene Lösung weist den Vorteil auf, daß lediglich ein Druckschlauch Verwendung finden muß, so daß die Handschere leicht und sicher handhabbar ist. Vorteilhaft ist außerdem, daß sich nach Abschalten der Antriebseinheit der Druckpumpe die Schere selbsttätig öffnet, so daß keine Steuerorgane notwendig sind. Zum Schließen der Schneidklinge des Scherenteils muß lediglich eine ganz geringe Menge Drucköl bewegt werden.

Da außerdem die Antriebseinheit der Druckpumpe nur während des Schließens der Schneidklingen des Scherenteils in Tätigkeit ist, ist eine relativ kleine Batterie ausreichend, um die Handschere mehrere Stunden lang benutzen zu können. Wegen des weiterhin äußerst einfachen Aufbaus weist das Druckteil nur ein sehr geringes Gewicht auf, so daß das Druckteil auf dem Rücken getragen werden kann. Die kurze Verbindung zwischen Druckteil und Handschere ermöglicht so eine längere Verwendung der Schere ohne Ermüdung.

Vorzugsweise hat die Bypassleitung einen wesentlich geringeren Durchflußquerschnitt als die übrigen Leitungen. Bei einer bevorzugten Ausführungsform nimmt die Bypassleitung ca. 5 bis 8 % der Fördermenge der Druckpumpe auf.

Vorzugsweise weist das Dreiwegeventil eine zylinderförmige Hülse auf, die an ihrer einen Seite mit der Druckleitung zur Druckpumpe und die an an ihrer anderen Seite mit der Rücklaufleitung verbunden ist, hat die zylinderförmige Hülse in ihrem Außenmantel eine Durchtrittsöffnung, an der der Druckschlauch zum Steuerteil angeordnet ist, und ist der druckgesteuerte Steuerkolben in der Hülse gegen den Druck einer vorgespannten Feder von einer die Durchtrittsöffnung zur Rücklaufleitung freigebenden Stellung durch den Druck in der Druckleitung der Druckpumpe in eine die Durchtrittsöffnung zur Druckleitung freigebende Stellung verschiebbar geführt.

Vorteilhaft ist die Bypassleitung als im Steuerkolben angeordnete durchgehende Ausnehmung ausgebildet.

Bei einer weiteren vorteilhaften Ausführungsform ist die Bypassleitung als Ringspaltkanal um den mit Spiel in der Hülse angeordneten Steuerkolben ausgebildet.

Vorzugsweise ist der Steuerkolben als Doppelkolben mit einer mittleren in Umfangsrichtung umlaufenden, nutartigen Ausnehmung ausgebildet. Vorteilhaft ist im Steuerkolben von der mittleren nutartigen Ausnehmung bis zu der der Rücklaufleitung zugeordneten Kolbenseite ein Durchlaßkanal angeordnet.

Der durch die Feder im Dreiwegeventil am Steuerkolben wirkende Flächendruck ist vorzugsweise größer als der der durch die Rückstellfeder am Druckkolben im Scherenteil wirkende Flächendruck.

Vorzugsweise besteht der Behälter für die Druckflüssigkeit aus einem elastisch ausdehnbaren Werkstoff.

Die Druckpumpe ist vorzugsweise als Zahnradpumpe mit einer Fördermenge von ca. 2 l/min bei einem Druck von ca. 20 bar ausgebildet.

Vorzugsweise beträgt der Durchmesser des Steuerkolbens ca. 7,5 mm und ist der Steuerkolben mit einem Spiel von ca. 3/100 mm in der Hülse angeordnet. Die Federsteifigkeit der Feder im Steuerventil beträgt ca. 15 N/cm.

Vorteilhaft beträgt der Durchmesser des Steuerkolbens im Scherenteil ca. 32 mm. Vorzugsweise beträgt die Federsteifigkeit der Rückstellfeder im Steuerteil ca. 100 N/cm.

Die Erfindung ist in den Zeichnungen beispielhaft dargestellt. Es zeigen:
- Fig. 1: die erfindungsgemäße Handschere im schematischer Übersicht,
- Fig. 2 bis 4: ein Steuerventil mit Bypassleitung,
- Fig. 5 und 6: ein Steuerventil mit Steuerkolben mit durchgehender Ausnehmung als Bypass und
- Fig. 7 und 8: ein Steuerventil mit Ringspaltkanal als Bypass.

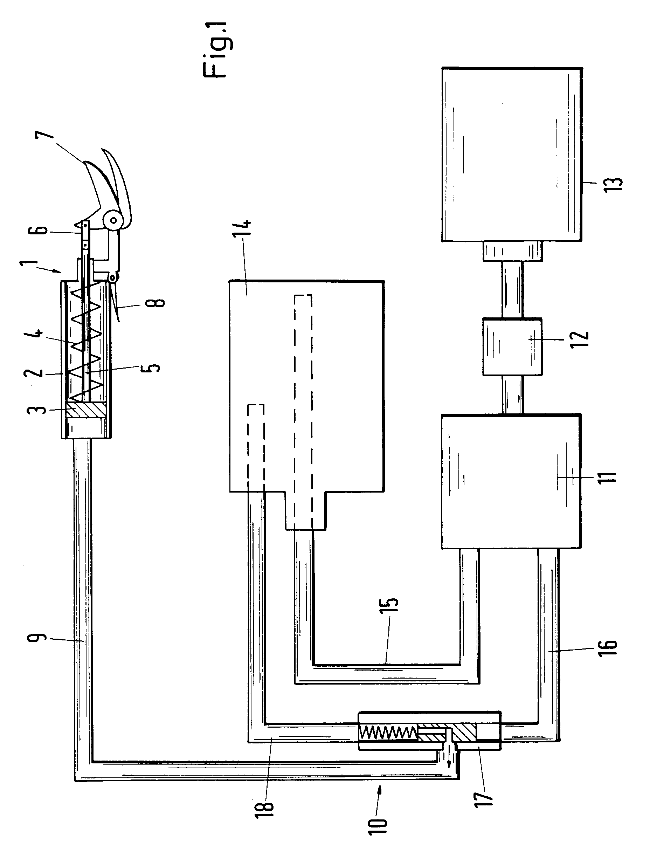

Nach Fig. 1 besteht eine Handschere aus einem Scherenteil 1 mit einem Druckzylinder 2 als Handgriff, in dem ein Druckkolben 3 gegen die Kraft einer Rückstellfeder 4 verschiebbar geführt ist.

Der Druckkolben 3 ist über eine Kolbenstange 5 und eine Gelenkverbindung 6 mit einer Schneidklinge 7 verbunden, so daß bei Verschiebung des Druckkolbens 3 sich die Schneidklinge 7 des Scherenteils 1 öffnet bzw. schließt. Im Scherenteil 1 ist weiterhin ein Steuerhebel 8 angeordnet.

Das Scherenteil 1 ist über einen Druckschlauch 9 mit einem Druckteil 10 verbunden. Im Druckteil 10 ist eine Druckpumpe 11 angeordnet. Die Druckpumpe 11 ist als Zahnradpumpe für eine Druckflüssigkeit, vorzugsweise Öl, mit einer Fördermenge von 2 l/min bei einem Druck von 20 bar ausgebildet. Über eine Kupplung 12 ist die Druckpumpe 11 mit einem Elektromotor 13 verbunden, der durch eine nicht dargestellte Batterie gespeist wird. Der Steuerhebel 8 ist über eine nicht dargestellte elektrische Leitung wirksam mit der Batterie und dem Elektromotor 13 verbunden, so daß bei Betätigung des Steuerhebels 8 der Elektromotor 13 in Tätigkeit gesetzt wird und so die Druckpumpe 11 antreibt.

Wie die Fig. 1 ferner zeigt, ist im Druckteil 10 ein Behälter 14 aus einem elastisch ausdehnbaren Werkstoff zur Aufnahme der Druckflüssigkeit angeordnet. Der Behälter 14 ist über eine Saugleitung 15 mit der Druckpumpe 11 verbunden.

Eine Druckleitung 16 führt von der Druckpumpe 11 zu einem Dreiwegeventil 17, das mit dem Druckschlauch 9 zum Scherenteil 1 verbunden ist und das über eine Rücklaufleitung 18 mit dem Behälter 14 verbunden ist.

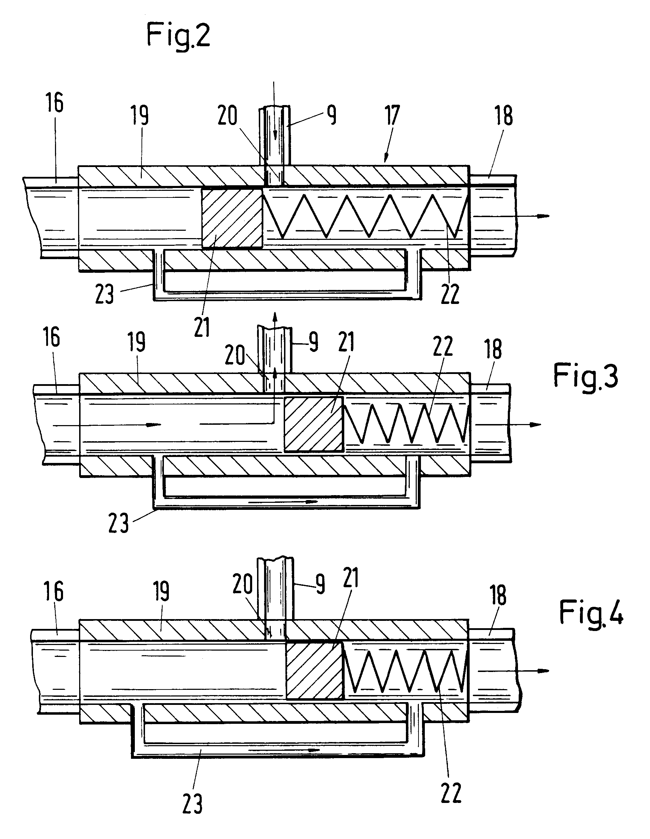

Der Aufbau und die Wirkungsweise des Dreiwegeventils 17 ergibt sich aus den Fig. 2 bis 8.

Wie die Fig. 2 bis 8 zeigen, hat das Dreiwegeventil 17 eine zylinderförmige Hülse 19, die an ihrer einen Seite mit der Druckleitung 16 zur Druckpumpe 11 und an ihrer anderen Seite mit der Rücklaufleitung 18 zum Behälter 14 verbunden ist. Die zylinderförmige Hülse 19 hat an ihrem Außenmantel eine Durchtrittsöffnung 20, an der der Druckschlauch 9 zum Scherenteil 1 angeordnet ist.

Wie die Fig. 2 bis 8 weiter zeigen, ist in der zylinderförmigen Hülse 19 ein Steuerkolben 21 gegen den Druck einer vorgespannten Feder 22 zwischen zwei Schaltstellungen verschiebbar geführt.

In der Ruhestellung (Fig. 2, 5 und 7) ist der Steuerkolben 21 in einer Stellung, in der der Druckschlauch 9 und die Rücklaufleitung 18 miteinander verbunden sind. In dieser Stellung kann die Rückstellfeder 4 den Druckkolben 3 im Scherenteil 1 zurückschieben, da das im Druckzylinder 2 und im Druckschlauch 9 befindliche Drucköl über das Dreiwegeventil 17 und die Rücklaufleitung 18 in den Behälter 14 zurückfließen kann. Somit öffnet sich die Schneidklinge 7. Die Rückstellfeder 4 ist derart bemessen, daß sie die beim Zurückschieben des Druckkolben 3 auftretenden Reibungsverluste überwindet.

In Arbeitsstellung befindet sich der Steuerkolben 21 in einer Schaltstellung (Fig. 3, 4, 6 und 8), in der die Druckleitung 16 der Druckpumpe 11 mit dem Druckschlauch 9 zum Scherenteil 1 verbunden ist, so daß das von der Druckpumpe 11 gelieferte Drucköl über das Dreiwegeventil 17 und den Druckschlauch 9 den Druckkolben 2 im Scherenteil 1 beaufschlagt und so die Schneidklinge 7 schließt.

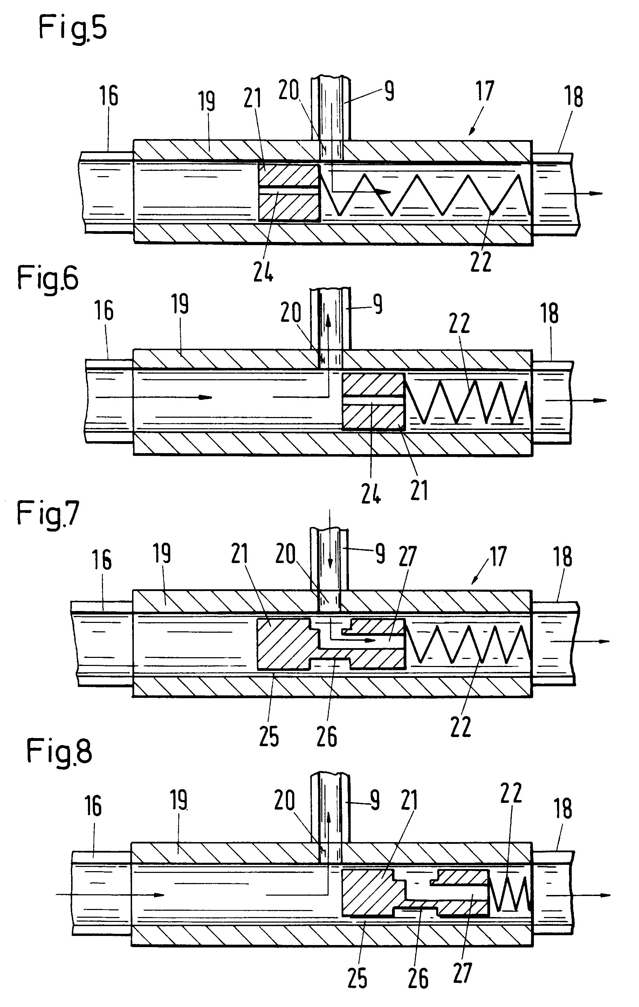

Bei der Ausführungsform des Dreiwegeventils 17 nach den Fig. 2 bis 4 sind die Druckleitung 16 und die Rücklaufleitung 18 durch eine Bypassleitung 23 miteinander verbunden. Bei der Ausführungsform eines Dreiwegeventiles 17 nach den Fig. 5 und 6 ist die Bypassleitung als im Steuerkolben 21 angeordnete, durchgehende Ausnehmung 24 ausgebildet. Bei der Ausführungsform eines Dreiwegeventils 17 nach den Fig. 7 und 8 ist die Bypassleitung als Ringspaltkanal 25 um den mit Spiel in der zylinderförmigen Hülse 19 angeordneten Steuerkolben 21 ausgebildet.

Die Bypassleitung 23, die Ausnehmung 24 oder der Ringspaltkanal 25 sind derart ausgebildet, daß sie ca. 5 bis 8 % der Fördermenge der Druckpumpe 11 aufnehmen.

Ist der Steuerhebel 8 in Ruhestellung, d. h. der Elektromotor außer Betrieb, so befindet sich der Steuerkolben 21 in Ruhestellung, wie es die Fig. 2, 5 und 7 zeigen. Wird nun der Steuerhebel 8 betätigt, so wird über den Elektromotor 13 die Druckpumpe 11 in Tätigkeit gesetzt, die das Drucköl in die Druckleitung 16 preßt. Durch den in der Druckleitung 16 auftretenden Druck wird dann der Steuerkolben 21 entgegen der Kraft der vorgespannten Feder 22 in die in den Fig. 3, 6 und 8 dargestellte Arbeitsstellung geschoben, so daß das Drucköl über den Druckschlauch 9 zum Scherenteil 1 fließt und so die Schneidklinge 7 betätigt.

Während dieses Vorgangs fließt ein geringer Teil des Drucköls über die Bypassleitung 23, bzw. die Ausnehmung 24 oder den Ringspaltkanal 25 über die Rücklaufleitung 18 zum Behälter 14 zurück.

Wird der Steuerhebel 8 freigegeben, so wird der Elektromotor 13 in Ruhe gesetzt, so daß die Druckpumpe 11 kein Drucköl mehr liefert. Wie insbesondere die Fig. 9 zeigt, kann nunmehr das in der Druckleitung 16, dem Druckschlauch 9 bzw. dem Druckzylinder 2 des Scherenteils 1 befindliche Drucköl über die Bypassleitung 23, die Ausnehmung 24 oder den Ringspaltkanal 25 durch die Rücklaufleitung 18 zum Behälter 14 zurückfließen, so daß sich der Druck verringert. Die Feder 22 schiebt daher den Steuerkolben 21 in seine Ruhestellung zurück, so daß der Druckschlauch 9 mit der Rücklaufleitung 18 verbunden wird und sich die Schneidklinge schnell wieder öffnet. Durch die Bemessung der Bypassleitung kann der Öffnungsvorgang zeitlich beeinflußt werden.

Da sich bei Betätigung des Steuerhebels 8 der Druck langsam aufbaut, schließt sich die Schneidklinge 7 der Handschere langsam, so daß der Schließvorgang durch Loslassen des Steuerhebels jederzeit unterbrochen werden kann. Daher ist mit der erfindungsgemäßen Handschere ein genaues und sicheres Arbeiten ohne Verletzungsgefahr möglich.

Wie die Fig. 7 und 8 zeigen, ist der Steuerkolben 21 als Doppelkolben mit einer mittleren, in Umfangsrichtung umlaufenden, nutartigen Ausnehmung 26 ausgebildet, von der aus ein Durchlaßkanal 27 bis zu der der Rücklaufleitung 18 zugeordneten Kolbenseite geführt ist.

Da der Behälter 14 aus einem elastisch dehnbaren Werkstoff besteht, zieht sich der Behälter bei Betätigung der Schere zusammen, so daß im Behälter 14 kein Vakuum entsteht. Öffnet sich die Schere, so fließt das Drucköl wieder in den Behälter 14 zurück, der sich wieder ausdehnt. Durch diese Ausbildung befindet sich das Drucköl in einem geschlossenen System, so daß ein Auslaufen von Öl und damit eine Umweltverschmutzung ausgeschlossen ist.

## Patentansprüche

1. Handschere zum Schneiden von Pflanzen, insbesondere zur Verwendung in Weinbergen und Baumschulen, bestehend aus einem von Hand zu haltenden Scherenteil mit einem durch ein Druckmedium gegen den Druck einer Rückstellfeder verschiebbaren Druckkolben zur Betätigung der Schneidklingen, einem im Scherenteil angeordneten Steuerhebel und einem durch einen Druckschlauch mit dem Scherenteil verbundenen Druckteil mit Druckpumpe und Antriebseinheit, wobei der Steuerhebel wirksam mit der Antriebseinheit der Druckpumpe für eine Druckflüssigkeit verbunden ist, dadurch gekennzeichnet, daß über ein durch den Druck in der Druckleitung (16) gesteuertes Dreiwegeventil (17) bei eingeschalteter Druckpumpe die Druckleitung der Druckpumpe mit dem Druckschlauch (9) zum Scherenteil (1) und bei ausgeschalteter Druckpumpe der Druckschlauch (9) zum Scherenteil (1) mit einer Rücklaufleitung (18) zu einem Behälter (14) für die Druckflüssigkeit verbunden ist, wobei das druckgesteuerte Dreiwegeventil (17) einen zwischen den beiden Schaltstellungen durch den Druck in der Druckleitung der Druckpumpe verschiebbaren, federbelasteten Steuerkolben (21) hat, und daß die Druckleitung der Druckpumpe und die Rücklaufleitung durch eine Bypassleitung (23,24,25) miteinander verbunden sind.

2. Handschere nach Anspruch 1, dadurch gekennzeichnet, daß die Bypassleitung (23,24,25) einen wesentlich geringen Durchflußquerschnitt als die übrigen Leitungen hat.

3. Handschere nach Anspruch 2, dadurch gekennzeichnet, daß die Bypassleitung (23,24,25) ca. 5 bis 8 % der Fördermenge der Druckpumpe (11) aufnimmt.

4. Handschere nach einem der Ansprüche 1 bis 3, dadurch gekennzeichnet, daß das Dreiwegeventil (17) eine zylinderförmige Hülse (19) aufweist, die an ihrer einen Seite mit der Druckleitung (16) zur Druckpumpe (11) und an ihrer anderen Seite mit der Rücklaufleitung (18) verbunden ist, daß die zylinderförmige Hülse in ihrem Außenmantel eine Durchtrittöffnung (20) hat, an der der Druckschlauch (9) zum Scherenteil (1) angeordnet ist, und daß der druckgesteuerte Steuerkolben (21) in der Hülse gegen den Druck einer vorgespannten Feder (22) von einer die Durchtrittsöffnung (20) zur Rücklaufleitung (18) freigebenden Stellung durch den Druck in der Druckleitung (16) der Druckpumpe (11) in eine die Durchtrittsöffnung (20) zur Druckleitung (16) freigebende Stellung verschiebbar geführt ist.

5. Handschere nach einem der Ansprüche 1 bis 4, dadurch gekennzeichnet, daß die Bypassleitung als im Steuerkolben (21) angeordnete durchgehende Ausnehmung (24) ausgebildet ist.

6. Handschere nach einem der Ansprüche 1 bis 4, dadurch gekennzeichnet, daß die Bypassleitung als Ringspaltkanal (25) um den mit Spiel in der Hülse (19) angeordneten Steuerkolben (21) ausgebildet ist.

7. Handschere nach einem der Ansprüche 1 bis 6, dadurch gekennzeichnet, daß der Steuerkolben (21) als Doppelkolben mit einer mittleren in Umfangsrichtung umlaufenden, nutartigen Ausnehmung (26) ausgebildet ist.

8. Handschere nach Anspruch 7, dadurch gekennzeichnet, daß im Steuerkolben (21) von der mittleren nutartigen Ausnehmung (26) bis zu der der Rücklaufleitung (18) zugeordneten Kolbenseite ein Durchflußkanal (27) angeordnet ist.

9. Handschere nach einem der Ansprüche 1 bis 8, dadurch gekennzeichnet, daß der durch die Feder (22) im Dreiwegeventil (17) am Steuerkolben (21) wirkende Flächendruck größer als der durch die Rückstellfeder (4) am Druckkolben (3) im Scherenteil (1) wirkende Flächendruck ist.

10. Handschere nach einem der Ansprüche 1 bis 9, dadurch gekennzeichnet, daß der Behälter (14) für die Druckflüssigkeit aus einem elastisch ausdehnbaren Werkstoff besteht.

11. Handschere nach einem der Ansprüche 1 bis 10, dadurch gekennzeichnet, daß die Druckpumpe (11) als Zahnradpumpe mit einer Fördermenge von ca. 2 l/min bei einem Druck von ca. 20 bar ausgebildet ist.

12. Handschere nach Anspruch 11, dadurch gekennzeichnet, daß der Durchmesser des Steuerkolbens (21) ca. 7,5 mm beträgt und daß der Steuerkolben mit einem Spiel von ca. 3/100 mm in der Hülse (19) des Dreiwegeventils (17) angeordnet ist.

13. Handschere nach Anspruch 12, dadurch gekennzeichnet, daß die Federsteifigkeit der Feder (22) im Steuerventil (17) ca. 15 N/cm beträgt.

14. Handschere nach einem der Ansprüche 11 bis 13, dadurch gekennzeichnet, daß der Durchmesser des Druckkolbens (3) im Scherenteil (1) ca. 32 mm beträgt.

15. Handschere nach Anspruch 14, dadurch gekennzeichnet, daß die Federsteifigkeit der Rückstellfeder (4) im Scherenteil (1) ca. 100 N/cm beträgt.

## Claims

1. Hand shears for cutting plants, particularly for use in vineyards and tree nurseries, consisting of a shears part to be held manually, having a pressure piston, which is displaceable by a pressure medium against the pressure of a pull-back spring, for operating the cutting blades, having a control lever disposed in the shears part and having a pressure part, with a pressure pump and a drive unit, which is connected to the shears part by a pressure hose, wherein the control lever is actively connected to the drive unit of the pressure pump for a hydraulic fluid, characterised in that, by way of a three-way valve (17) controlled by the pressure in the pressure line (16), the pressure line of the pressure pump is connected by the pressure hose (9) to the shears part (1) when the pressure pump is switched on and the pressure hose (9) to the shears part (1) is connected to a return line (18) leading to a container (14) for the hydraulic fluid when the pressure pump is switched off, wherein the pressure-controlled three-way valve (17) has a spring-loaded control piston (21) which is displaceable between the two switching positions by the pressure in the pressure line of the pressure pump, and that the pressure line of the pressure pump and the return line are connected to each other by a bypass line (23,24,25).

2. Hand shears according to claim 1, characterised in that the bypass line (23,24,25) has a flow cross-section which is considerably smaller than that of the other lines.

3. Hand shears according to claim 2, characterised in that the bypass line (23,24,25) takes about 5 to 8 % of the delivery output of the pressure pump (11).

4. Hand shears according to any one of claims 1 to 3, characterised in that the three-way valve (17) has a cylindrical sleeve (19), one side of which is connected to the pressure line (16) to the pressure pump (11) and the other side of which is connected to the return line (18), that the cylindrical sleeve has a passageway opening (20) in its external curved surface on which the pressure hose (9) to the shears part (1) is disposed, and that the pressure-controlled control piston (21) is guided in the sleeve, against the pressure of a prestressed spring (22), so that it is displaceable by the pressure in the pressure line (16) of the pressure pump (11) from a position which exposes the passageway opening (20) to the return line (18) into a position which, exposes the passageway opening (20) to the pressure line (16).

5. Hand shears according to any one of claims 1 to 4, characterised in that the bypass line is constructed as a recess (24) disposed in and passing through the control piston (21).

6. Hand shears according to any one of claims 1 to 4, characterised in that the bypass line is constructed as an annular aperture channel (25) around the control piston (21) which is disposed with a clearance in the sleeve (19).

7. Hand shears according to any one of claims 1 to 6, characterised in that the control piston (21) is constructed as a double piston having a central groove-like recess (26) surrounding it circumferentially.

8. Hand shears according to claim 7, characterised in that a flow channel (27) is disposed in the control piston (21) from the central, groove-like recess (26) to the side of the piston associated with the return line (18).

9. Hand shears according to any one of claims 1 to 8, characterised in that the surface pressure acting on the control pistol (21) due to the spring (22) in the three-way valve (17) is greater than the surface pressure acting on the pressure piston (3) in the shears part (1) due to the pull-back spring (4).

10. Hand shears according to any one of claims 1 to 9, characterised in that the container (14) for the hydraulic fluid consists of all elastically dilatable material.

11. Hand shears according to any one of claims 1 to 10, characterised in that the pressure pump (11) is constructed as a gear pump with a delivery output of about 2 l/minute at a pressure of about 20 bar.

12. Hand shears according to claim 11, characterised in that the diameter of the control piston (21) is about 7.5 mm and that the control piston is disposed in the sleeve (19) of the three-way valve (17) with a clearance of about 3/100 mm.

13. Hand shears according to according to claim 12, characterised in that the spring rigidity of the spring (22) in the control valve (17) is about 15 N/cm.

14. Hand shears according to according to any one of claims 11 to 13, characterised in that the diameter of the pressure piston (3) in the shears part (1) is about 32 mm.

15. Hand shears according to claim 14, characterised in that the spring rigidity of the pull-back spring (4) in the shears part (1) is about 100 N/cm.

## Revendications

1. Cisaille à main pour couper des plantes, destinée notamment à être utilisée dans des vignobles et dans des pépinières, constituée par une branche de cisaille devant être tenue à la main et comportant un piston de refoulement, déplaçable par un fluide sous pression à l'encontre de la pression d'un ressort de rappel, pour actionner les lames de coupe, un levier de commande disposé dans la branche de cisaille et un élément de pression, qui est relié par un tuyau sous pression à la partie de cisaille et comporte une pompe de refoulement et une unité d'entraînement, le levier de commande étant relié selon une liaison active à l'unité d'entraînement de la pompe de refoulement servant à délivrer un liquide sous pression, caractérisée en ce que la canalisation de refoulement de la pompe de refoulement est reliée, par l'intermédiaire d'une soupape à trois voies (17) commandée par la pression régnant dans la canalisation de refoulement (16), au tuyau sous pression (9) aboutissant à la partie de cisaille (1), lorsque la pompe de refoulement est activée, et relie le tuyau sous pression (9) aboutissant à la partie de cisaille (1) à une canalisation de retour (18) aboutissant à un récipient (14) pour le liquide sous pression, lorsque la pompe de refoulement est désactivée, la soupape à trois voies (17) commandée par la pression possédant un piston de commande (21), qui peut être déplacé entre les deux positions de commutation par la pression régnant dans la canalisation de refoulement de la pompe de refoulement et est chargé par un ressort, et en ce que la canalisation de pression de la pompe de refoulement et la canalisation de retour sont reliées entre elles par une canalisation de dérivation (23,24,25).

2. Cisaille à main selon la revendication 1, caractérisée en ce que la canalisation de dérivation (23, 24,25) possède une section transversale de passage nettement plus faible que celle des autres canalisations.

3. Cisaille à main selon la revendication 2, caractérisée en ce que la canalisation de dérivation (23, 24,25) reçoit environ 5 à 8 % de la quantité refoulée par la pompe de refoulement (11).

4. Cisaille à main selon l'une des revendications 1 à 3, caractérisée en ce que la soupape à trois voies (17) possède une douille cylindrique (19), qui est reliée, sur l'un de ses côtés, à la canalisation de refoulement (16) aboutissant à la pompe de refoulement (11) et, sur son autre côté, à la canalisation de retour (18), que la douille cylindrique comporte, dans son enveloppe extérieure, une ouverture de traversée (20), à laquelle est raccordé le tuyau sous pression (9) aboutissant à la partie de cisaille (1), et que le piston de commande (21) commandé par la pression est guidé de manière à être déplaçable dans la douille à l'encontre de la pression d'un ressort précontraint (22), sous l'effet de la pression régnant dans la canalisation de refoulement (16) de la pompe de refoulement (11), depuis une position qui libère l'ouverture de traversée (20) en direction de la canalisation de retour (18), dans une position libérant l'ouverture de traversée (20) aboutissant à la canalisation de refoulement (16).

5. Cisaille à main selon l'une des revendications 2 à 4, caractérisée en ce que la canalisation de dérivation est agencée sous la forme d'un passage traversant (24) situé dans le piston de commande (29).

6. Cisaille à main selon l'une des revendications 1 à 4, caractérisée en ce que la canalisation de dérivation est agencée sous la forme d'un canal en forme de fente annulaire (25) situé autour du piston de commande (21) disposé avec jeu dans la douille (19).

7. Cisaille à main selon l'une des revendications 1 à 6, caractérisée en ce que le piston de commande (21) est agencé sous la forme d'un piston double comportant un évidement médian en forme de gorge (26), qui s'étend dans la direction circonférentielle.

8. Cisaille à main selon la revendication 7, caractérisée en ce qu'un canal de traversée (27) est disposé dans le piston de commande (21) de manière à s'étendre depuis l'évidement médian en forme de gorge (26) jusqu'à la face du piston tournée vers la canalisation de retour (18).

9. Cisaille à main selon l'une des revendications 1 à 8, caractérisée en ce que la pression de surface, qui agit sous l'effet du ressort (22) dans la soupape à trois voies (17) au niveau du piston de commande (21), est supérieure à la pression de surface qui agit sous l'effet du ressort de rappel (4) au niveau du piston de refoulement (3) dans la partie de cisaille (1).

10. Cisaille à main selon l'une des revendications 1 à 9, caractérisée en ce que le récipient (14) pour le liquide sous pression est réalisé en un matériau dilatable élastiquement.

11. Cisaille à main selon l'une des revendications 1 à 10, caractérisée en ce que la pompe de refoulement (11) est réalisée sous la forme d'une pompe à engrenages possédant un débit d'environ 2 l/mn pour une pression d'environ 20 bars.

12. Cisaille à main selon la revendication 11, caractérisée en ce que le diamètre du piston de commande (21) est égal à environ 7,5 mm et que le piston de commande est disposé avec un jeu d'environ 3/100 mm dans la douille (19) de la soupape à trois voies (17).

13. Cisaille à main selon la revendication 12, caractérisée en ce que la raideur élastique du ressort (22) dans la soupape de commande (17) est égale à environ 15 N/cm.

14. Cisaille à main selon l'une des revendications 11 à 13, caractérisée en ce que le diamètre du piston de refoulement (3) dans la partie de cisaille (1) est égal à environ 32 mm.

15. Cisaille à main selon la revendication 14, caractérisée en ce que la raideur élastique du ressort de rappel (4) dans la partie de cisaille (1) et égale à environ 100 N/cm.
